# EUROPEAN PATENT SPECIFICATION

(11) **EP 3 383 053 B1**
(45) Date of publication and mention of the grant of the patent: **13.05.2020**
(21) Application number: 18164643.1
(22) Date of filing: 28.03.2018
(51) Int. Cl.: H04N 21/418, H04N 21/4363, H04N 21/442, H04N 21/436, H04N 21/4402

(54) **BROADCAST RECEIVING DEVICE, DATA TRANSFER METHOD, AND RECORDING MEDIUM**
RUNDFUNKEMPFANGSVORRICHTUNG, DATENÜBERTRAGUNGSVERFAHREN UND AUFZEICHNUNGSMEDIUM
DISPOSITIF DE RÉCEPTION DE DIFFUSION, PROCÉDÉ DE TRANSFERT DE DONNÉES ET SUPPORT D'ENREGISTREMENT

(30) Priority: 30.03.2017 JP 2017067869
(43) Date of publication of application: 03.10.2018
(73) Proprietor: Panasonic Intellectual Property Management Co., Ltd., Osaka-shi, Osaka 540-6207 (JP)
(72) Inventor: KAWANABE, Kazuki, Osaka, 540-6207 (JP); FUJIISHI, Shuji, Osaka, 540-6207 (JP)
(74) Representative: Vigand, Philippe

(56) References cited:
- US-A1- 2012 076 199
- US-A1- 2017 064 379
- US-B1- 6 801 971

## Description

### FIELD

The present disclosure relates to a broadcast receiving device that receives an encrypted broadcast signal.

### BACKGROUND

In broadcast receiving devices that receive digital broadcast in Europe, the Digital Video Broadcasting - Common Interface (DVB-CI) system, or the DVB-CI Plus system is used for viewing a pay broadcast in which signals encrypted by scramble processing are used. In the DVB-CI system, each broadcast receiving device includes a common interface (CI) slot into which a conditional access module (CAM) is inserted and connected. In a broadcast receiving device, a front end (FE), which is a circuit such as a tuner that tunes in a pay broadcast and receives broadcast signals, outputs a transport stream (TS) which is transferred to the CAM connected to the CI slot, and encrypted signals are decrypted in the CAM. Thus, a viewing subscriber of a certain pay broadcast can view the pay broadcast by using a CAM which can decrypt the signals from the pay broadcast. For instance, in the interface specification of the DVB-CI Plus standard that defines the DVB-CI Plus system, the upper limit of bit rate, with which a TS is transferred to the CAM, is 96Mbps. Also, a CAM having a function of decrypting multiple TSs is defined in version 1.4 of the DVB-CI Plus system.

Patent Literature 1 discloses a technique in which packets of unselected service channels are excluded from a transport stream including packets of multiple service channels in a time-division manner, and time stamp of the input time is added to the remaining packets which are sequentially transmitted to an external device so that the transmission bit rate is reduced.

US 2017/064379 A1 discloses an input/output device that receives a content from an external source and transmits this content to an external apparatus through a wireless interface. When the content is a moving image, the content is encoded before being transmitted to the external apparatus. The encoder encodes the moving image at a compression rate that depends on a data size of the image and a transmission speed of the wireless interface. The compression rate is determined in order to allow the wireless transmission of the moving image while avoiding that the user may feel an image quality deterioration.

### CITATION LIST

### PATENT LITERATURE

PTL 1: WO 2013/118545

### NON-PATENT LITERATURE

NPTL 1: EUROPEAN STANDARD EN50221, Common Interface Specification for Conditional Access and other Digital Video Broadcasting Decoder Applications, English Version, Ref No EN50221:1996E, February, 1997
NPTL 2: Digital Video Broadcasting (DVB); Extensions to the CI Plus Specification, ETSI TS 103 205 V1.1.1, March, 2014
NPTL 3: Digital Video Broadcasting (DVB); Extensions to the CI Plus Specification (CI Plus 1.4), DVB Document A165, June, 2015

### SUMMARY

### TECHNICAL PROBLEMS

A broadcast receiving device including a Universal Serial Bus (USB) port to which various devices such as a hard disk drive, and a USB memory can be connected. When a broadcast receiving device, which is compatible with version 2.0 or later of the DVB-CIPlus standard and utilizes a USB CAM, is assumed, due to an effect of various devices connected to the broadcast receiving device via the USB, a bandwidth usable by the CA varies, and encrypted signals may not be properly decrypted.

Thus, the present disclosure provides a broadcast receiving device that supports a USB CAM and allows a user to view a pay broadcast appropriately. In addition, the present disclosure provides a non-transitory computer-readable recording medium on which a data transfer method and a control program used by the broadcast receiving device are recorded.

### SOLUTIONS TO PROBLEMS

A broadcast receiving device in one aspect of the present disclosure is defined in claim 1.

Also, a data transfer method in one aspect of the present disclosure is defined in claim 7.

Also, a control program recorded on a recording medium in one aspect of the present disclosure is defined in claim 8.

### ADVANTAGEOUS EFFECTS

With the broadcast receiving device in one aspect of the present disclosure, a user can properly view a pay broadcast by attaching a USB CAM to the USB port of the broadcast receiving device.

### BRIEF DESCRIPTION OF DRAWINGS

FIG. 1 is a schematic diagram illustrating an example of a broadcast receiving system including a broadcast receiving device according to Embodiment 1.
FIG. 2 is a configuration diagram of a broadcast receiving device according to Embodiment 1.
FIG. 3 is a flowchart illustrating an operation example of the broadcast receiving device according to Embodiment 1.
FIG. 4 is a flowchart illustrating CAM transfer processing in the broadcast receiving device according to Embodiment 1.
FIG. 5 is a flowchart illustrating a modification of the CAM transfer processing.
FIG. 6 is a configuration diagram of a broadcast receiving device according to Embodiment 2.

### DESCRIPTION OF EMBODIMENTS

In order for a user to view pay broadcast appropriately, a broadcast receiving device in one aspect of the present disclosure includes: a first USB port to be connected to a conditional access module (CAM) that decrypts an inputted transport stream and outputs a decryption result; a measurer that measures communication performance for data transfer according to Universal Serial Bus (USB) specification by performing data transfer to and from the CAM; a receiver that receives a broadcast signal and outputs a transport stream based on the broadcast signal; a controller that performs data transfer to and from the CAM for transmitting the transport stream outputted by the receiver to the CAM and receiving a decryption result; a second USB port to be connected to a device; and a determining unit that, when an operation for data transfer to and from the device connected to the second USB port is received, performs determination as to whether or not a predetermined condition is satisfied in data transfer according to USB, based on the communication performance measured by the measurer, the predetermined condition being that transfer with a first bit rate necessary for data transfer to and from the CAM by the controller is achieved and transfer with a second bit rate necessary for data transfer with the device is achieved. When the predetermined condition is determined to be satisfied by the determining unit, the controller further performs data transfer to and from the device specified by the operation. Thus, due to a relationship with the communication performance as the precondition of execution of data transfer to and from the device connected to the USB, determination as to whether or not data transfer to and from the CAM is appropriately performed is made based on a predetermined condition, and thus a bandwidth necessary for data transfer to and from the CAM can be ensured. When a necessary bandwidth is ensured, a signal encrypted by the CAM can be properly decrypted, and thus a user can view a pay broadcast appropriately. Also, when data transfer to and from a device has no effect on a bandwidth necessary for the CAM, the data transfer is performed, and thus for instance, recording of broadcast contents on the device is made possible, and the convenience of a user is improved.

Here, for instance, the controller may have a USB host controller that performs data transfer to and from the CAM connected to the first USB port and the device connected to the second USB port through a common transmission path. Thus, determination is made based on the bandwidth and the communication performance necessary for communication through a common transmission path, and data transfer to and from the CAM can be ensured.

Also, for instance, the controller may send an image signal to a display device via a transmission path not according to the USB, and when the predetermined condition is determined not to be satisfied by the determining unit, may suspend data transfer to and from the device specified by the operation, the image signal being generated by decoding a decryption result received from the CAM. Thus, a user is not prevented from viewing image contents related to a pay broadcast by the data transfer to and from the device.

Also, for instance, when suspending data transfer to and from the device specified by the operation, the controller may send to the display device a signal for displaying a predetermined message indicating that data transfer to and from the device is not performed. Thus, data transfer related to the device connected to the USB is not performed, a user can recognize that effect.

Also, for instance, the determining unit may refer to information that associates each of a plurality of device classes with a bit rate, and may identify the second bit rate based on a device class identified based on a descriptor received from the device connected to the second USB port, and may perform the determination. The information which associates each of the plurality of device classes and a bit rate can be appropriately defined in advance. Thus, a necessary bit rate can be presumably identified by referring to the descriptor without measuring a bit rate by performing transfer of a relatively large volume of data to and from the device connected to the USB port, for instance. Consequently, data transfer to and from the CAM can be prevented from being discontinued.

Also, for instance, the determining unit may refer to information that associates each of a plurality of modulation methods with a bit rate, and may identify the first bit rate based on a modulation method of the broadcast signal which is base of the transport stream provided to the CAM by the controller and is received by the receiver, and may perform the determination. The information, which associates the modulation method for the broadcast signal received by the broadcast receiving device with a bit rate, can be appropriately defined in advance. Consequently, in the case where the upper limit of the bit rate of the transport stream is determined by the modulation method, determination for ensuring data transfer to and from the CAM can be efficiently made.

Also, for instance, the determining unit may refer to information that associates each of a plurality of service types with a bit rate, and may identify the first bit rate based on a service type indicated by the broadcast signal which is base of the transport stream provided to the CAM by the controller and is received by the receiver, and may perform the determination. The information, which associates each of the types of various services broadcast by a broadcasting station with a bit rate, can be appropriately defined in advance. Consequently, in the case where the upper limit of the bit rate of the transport stream is determined by received service, determination for ensuring data transfer to and from the CAM can be efficiently made.

Also, for instance, the first bit rate may be a predetermined bit rate defined in advance. Consequently, when data transfer to and from the CAM is performed with predetermined bit rate due to the standard for the interface with the CAM, determination as to propriety of execution of data transfer to and from the device can be efficiently made.

Also, for instance, the receiver may have a plurality of receiving circuits that receive a broadcast signal and output a transport stream based on the broadcast signal, and the controller may perform data transfer to and from the CAM for transmitting to the CAM one or more transport streams selected among respective transport streams outputted by the plurality of receiving circuits and for receiving a decryption result. Consequently, a transport stream to be data-transferred to and from the CAM is selected. Also, for instance, the controller may have an identifier that, for the plurality of receiving circuits, makes identification of respective bit rates necessary for data transfer of the transport stream outputted by the receiving circuit, and when a total of the bit rates identified by the identifier is smaller than a predetermined value, the controller may select all the transport stream outputted by each of the plurality of receiving circuits and may perform data transfer to and from the CAM for transmitting the transport stream to the CAM and receiving a decryption result, and when the total is larger than the predetermined value, the controller may not select a transport stream outputted by at least one of the plurality of receiving circuits based on a predetermined criterion related to priority order between the plurality of receiving circuits. Thus, selection is made from transport streams from a plurality of receiving circuits according to the priority of each receiving circuit, for instance. Consequently, for instance, data transfer of a transport stream having a high priority to the CAM can be appropriately performed.

Also, for instance, for each of the plurality of receiving circuits, the identifier may make the identification of the bit rate by calculating the bit rate necessary for data transfer of the transport stream based on detection of a predetermined packet in the transport stream outputted by the receiving circuit. The predetermined packet is a TS packet related to an image. Thus, a bit rate necessary for data transfer is calculated according to the contents of the actual transport stream, and therefore, a transport stream to be data-transferred to and from the CAM can be appropriately selected.

Also, a data transfer method in one aspect of the present disclosure provides a data transfer method used by a broadcast receiving device including a first USB port to be connected to a conditional access module (CAM) that decrypts an inputted transport stream and outputs a decryption result, a second USB port to be connected to a device, and a receiver that receives a broadcast signal and outputs a transport stream based on the broadcast signal, the method including: measuring communication performance for data transfer according to USB by performing data transfer to and from the CAM; performing first data transfer to and from the CAM for transmitting the transport stream outputted by the receiver to the CAM and receiving a decryption result; when an operation for data transfer to and from the device connected to the second USB port is received, determining whether or not a predetermined condition is satisfied in data transfer according to USB, based on the communication performance measured in the measuring, the predetermined condition being that transfer with a first bit rate necessary for data transfer to and from the CAM in the performing of first data transfer is achieved and transfer with a second bit rate necessary for data transfer with the device is achieved; and when the predetermined condition is determined to be satisfied by the determining unit, performing second data transfer to and from the device specified by the operation.

Consequently, when a USB CAM is utilized, an adverse effect due to other USB devices is reduced, and thus a user can view a pay broadcast appropriately.

Also, a control program recorded on a recording medium in one aspect of the present disclosure is for use in a broadcast receiving device including a microprocessor, a first USB port to be connected to a conditional access module (CAM) that decrypts an inputted transport stream and outputs a decryption result, a second USB port to be connected to a device, and a receiver that receives a broadcast signal and outputs a transport stream based on the broadcast signal, the control program for causing the broadcast receiving device to execute predetermined data transfer processing including: measuring communication performance for data transfer according to USB by performing data transfer to and from the CAM; performing first data transfer to and from the CAM for transmitting the transport stream outputted by the receiver to the CAM and receiving a decryption result; when an operation for data transfer to and from the device connected to the second USB port is received, determining whether or not a predetermined condition is satisfied in data transfer according to USB, based on the communication performance measured in the measuring, the predetermined condition being that transfer with a first bit rate necessary for data transfer to and from the CAM in the performing of first data transfer is achieved and transfer with a second bit rate necessary for data transfer with the device is achieved; and when the predetermined condition is determined to be satisfied in the determining, performing second data transfer to and from the device specified by the operation.

Consequently, the broadcast receiving device including the processor in which the control program is installed and executed can reduce an effect of USB devices other than the CAM, and thus a user can view a pay broadcast appropriately.

It should be noted that general or specific embodiments include one or multiple combinations of a device, a system, a method, an integrated circuit, a computer program, and a computer-readable recording medium.

Hereinafter, an embodiment will be described in detail with reference to the drawings as appropriate. However, a detailed description more than necessary may be omitted. For instance, detailed description of already well-known matters and redundant description of substantially the same components may be omitted. This is for the purpose of avoiding unnecessarily redundant description in the following and facilitating the understanding of those skilled in the art.

It should be noted that the inventor provides the drawings and the following description to allow those skilled in the art to understand the present disclosure sufficiently, and these are not intended to limit the subject matter recited in the claims. In other words, the numerical values, shapes, structural components, the arrangement and connection of the structural components, steps (processes), the sequence of the steps, which are described using specific examples below, are mere examples, and are not intended to limit the subject matter recited in the claims. Among the structural components in the subsequent embodiments, each of components not recited in the independent claims is such a component that may be arbitrarily added. It is to be noted that the respective figures are schematic diagrams and are not necessarily precise illustrations.

### (Embodiment 1)

Hereinafter, Embodiment 1 according a broadcast receiving device used by a broadcast receiving system will be described with reference to the drawings.

### [1-1. Configuration]

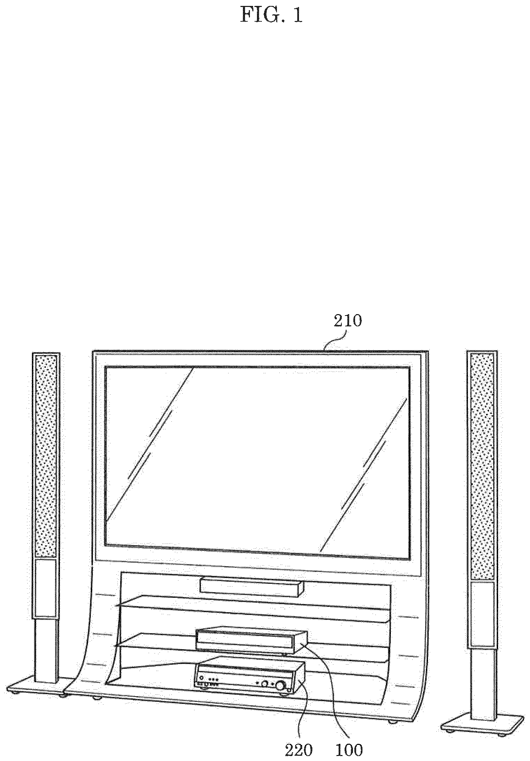

FIG. 1 is a schematic diagram illustrating an example of a broadcast receiving system in Embodiment 1.

The broadcast receiving system illustrated to FIG. 1 is a viewing system for broadcast contents including video and audio to be broadcast, and includes broadcast receiving device 100, display device 210, and recording device 220. In the broadcast receiving system of FIG. 1, broadcast receiving device 100 is used as a set top box (STB) that receives a broadcast signal and outputs broadcast contents.

Broadcast receiving device 100 has a processor (microprocessor), a memory, a broadcast receiving circuit, a communication interface, a user interface, for instance. The communication interface is a communication circuit for delivering and receiving information to and from another device, and includes an interface for USB. Also, the memory is, for instance, a ROM, or a RAM, and may include a non-volatile memory. The memory may pre-store a control program for implementing the processing of the later-described functional components, or setting values to be utilized by the control program. In addition, the memory may also be used to temporarily store the values used when the control program is executed by the processor. Broadcast receiving device 100 is basically in conformity with the DVB-CI Plus standard, and includes a USB port for CAM (first USB port) as a CI slot. An encrypted signal related to a pay broadcast, which is received from an antenna, a cable (not illustrated) by a receiver (a broadcast receiving circuit such as a tuner, a communication interface), is decrypted by the CAM connected to the USB port for CAM. A broadcast signal received by broadcast receiving device 100 is a digital broadcasting signal which is formed by modulating a transport stream (TS), and may be a signal broadcasted (transmitted) by any one of various broadcasting systems, such as terrestrial broadcasting, satellite broadcasting, Internet broadcasting and cable television, for instance. In digital broadcasting, broadcast contents are multiplexed and transmitted by a transport stream in conformity with the MPEG 2 system standard. According to a tuning operation by a user, broadcast receiving device 100 receives a broadcast signal, and outputs a signal related to the broadcast contents. A signal related to broadcast contents which is outputted by broadcast receiving device 100 is transmitted to display device 210 having a display screen, and recording device 220 which is a recording reproduction device or the like via a cable (not illustrated) or the like. Thus, a user can view broadcast contents displayed, for instance, on display device 210, and can record the broadcast contents in recording device 220. Also, broadcast receiving device 100 has a USB port (second USB port) other than the USB port for CAM, and is connectable to various devices, such as a hard disk drive, a USB memory, and a digital camera according to USB.

Display device 210 displays a video of broadcast contents on a display screen according to a signal transmitted from broadcast receiving device 100, and outputs, for instance, audio of the broadcast contents from a loudspeaker. The display is, for instance, a liquid crystal display, a plasma display, an organic electroluminescent (EL) display.

Recording device 220 has a memory medium (recording medium), such as a memory and a hard disk, and records data (data of the broadcast contents) related to a signal transmitted from broadcast receiving device 100 in a recording medium, and transmits a signal for reproducing the broadcast contents based on the recorded data to display device 210 according to a user operation.

Hereinafter, broadcast receiving device 100 in the above-mentioned broadcast receiving system will be described in detail.

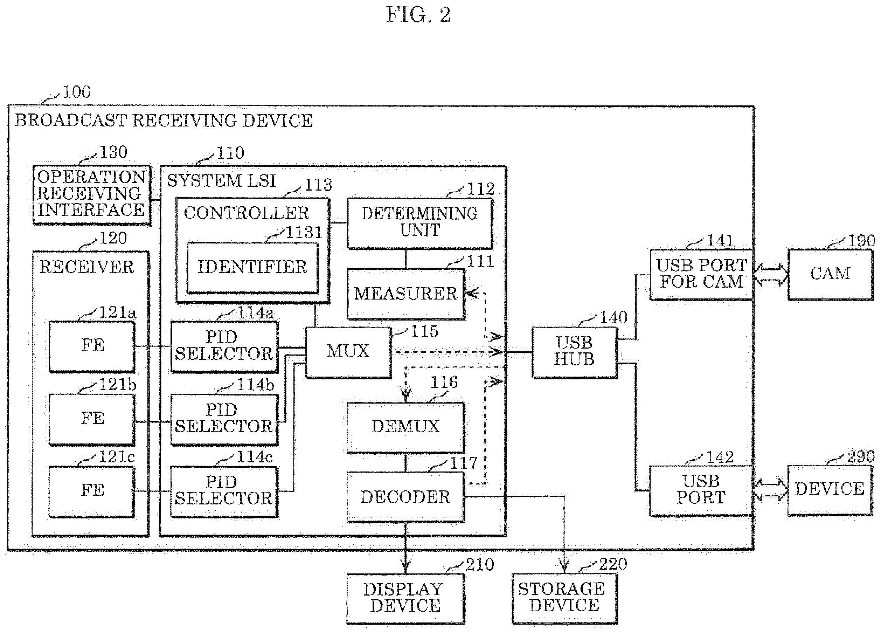

FIG. 2 illustrates the configuration of broadcast receiving device 100. FIG. 2 additionally illustrates CAM 190 connected to the USB port for CAM of broadcast receiving device 100, device 290 connected to the USB port of broadcast receiving device 100, and display device 210 and recording device 220 connected to broadcast receiving device 100 via a cable or the like.

As illustrated in FIG. 2, broadcast receiving device 100 includes system large scale integration (LSI) 110, receiver 120, operation reception 130, USB hub 140, USB port 141 for CAM (first USB port), and USB port (second USB port) 142.

System LSI 110 includes measurer 111, determining unit 112, controller 113, PID selectors 114a to 114c, multiplexer (Mux) 115, demultiplexer (Demux) 116, and decoder 117. System LSI 110 includes a memory and a processor, and can implement the functions as measurer 111, determining unit 112, and controller 113 by executing a control program stored in the memory by the processor, for instance.

Receiver 120 includes a broadcast receiving circuit such as a tuner, and front ends (FE) 121a to 121c implemented by a communication interface or the like. Each of FEs 121a to 121c (that is, each of a plurality of receiving circuits) receives a broadcast signal via an antenna, a cable, and has a function to outputting a specific transport stream extracted from a broadcast signal according to a user operation under the control of controller 113. For instance, in an FE including a broadcast receiving circuit such as a tuner, a broadcast signal related to a digital broadcasting wave received by an antenna is tuned and demodulated in accordance with a predetermined broadcasting system, and thus a transport stream is obtained and may be outputted. Here, the predetermined broadcasting system is, for instance, Digital Video Broadcasting-Terrestrial (DVB-T) system, Digital Video Broadcasting-Second Generation Terrestrial (DVB-T2) system, Digital Video Broadcasting-Cable (DVB-C) system, Digital Video Broadcasting-Satellite (DVB-S) system, and Digital Video Broadcasting Satellite-Second Generation (DVB-S2) system. For instance, in an FE including a communication interface, a broadcast signal transmitted via a network such as the Internet is received in accordance with a predetermined communication protocol, and thus a transport stream is obtained and may be outputted. A transport stream outputted to each FE is inputted to system LSI 110. FEs 121a to 121c have similar functions, but are not necessarily able to receive a broadcast signal from the same broadcasting station (that is, the transmission source of broadcast signals). For instance, FE 121a may receive a specific broadcast signal from broadcast waves received by an antenna, FE 121b may receive a broadcast signal of cable television via a cable, and FE 121c may receive a broadcast signal of Internet broadcasting via a cable. Broadcast receiving device 100 able to simultaneously receive separate broadcast contents from three different broadcasting stations by receiver 120, and is capable of processing three transport streams in parallel.

Operation reception 130 is implemented by a user interface, such as a button, a switch, which is provided in the housing of broadcast receiving device 100, and has a function of receiving and transmitting a user operation such as selection of broadcast to be received (tuned) to controller 113. The user interface may be a graphical user interface (GUI) using a display. Also, operation reception 130 includes, for instance, a receiving device for an infrared remote control signal, and may receive a signal of a user operation, such as button pressing, of a remote control device from the remote control unit, and may transmit the signal to controller 113.

USB port 141 for CAM is a terminal to be connected to CAM 190. CAM 190 is a type of USB device including a USB connector for connecting to USB port 141 for CAM. CAM 190 includes a decryption circuit, and has functions of decrypting an inputted transport stream and outputting a result of the decryption. Here, it is assumed that CAM 190 is a CAM which has a function of decrypting not only a single transport stream, but also a plurality of transport streams. CAM 190 is a USB module in which for instance, subscriber information corresponding to a user is recorded. A USB module is sent to a user from, for instance, a broadcaster, and the user connects the USB module to USB port 141 for CAM of broadcast receiving device 100 in order to utilize broadcast receiving device 100.

USB port 142 is a terminal to be connected to device 290. Device 290 is, for instance, a USB device such as a USB memory, and a hard disk drive.

USB hub 140 is a relay device that enables data transfer between system LSI 110 and a USB device (CAM 190, device 290 in the example of FIG. 2) connected to the USB port. System LSI 110 can perform data transfer to and from CAM 190 connected to USB port 141 for CAM and device 290 connected to USB port 142 by USB hub 140 through a common transmission path (specifically, a wire between USB hub 140 and system LSI 110).

In system LSI 110, controller 113 controls each unit. Controller 113 has a function as a USB host controller. In system LSI 110, a TS packet selected by PID selectors 114a to 114c is extracted from transport streams inputted from FE 121a to 121c by the control of controller 113, and is multiplexed by Mux115 to generate a local TS, and is data-transferred to CAM 190 of local TS via USB hub 140 and USB port 141 for CAM. Thus, in CAM 190, encrypted signals in the local TS are decrypted, and decrypted local TS is data-transferred to system LSI 110. It is to be noted that controller 113 con control so that data transfer related to the local TS is performed within a range of a maximum bit rate specified by the DVB-CI standard. Also, in system LSI 110, the decrypted local TS from CAM 190 is separated by Demux 116, and separated transport streams corresponding to the outputs of FE 121a to 121c are decoded by decoder 117. It is to be noted that in system LSI 110, when signals related to decrypted transport streams at CAM 190 are transmitted with local encryption between broadcast receiving device 100 and the CAM made in accordance with the DVB-CI Plus standard, encrypted signals are decrypted and utilized.

Decoder 117 includes a processor that decode a transport stream, and has a function determining whether or not a result of decryption by CAM 190 is normal by decoding decrypted signals outputted by CAM 190 connected to USB port 141 for CAM. For instance, decoder 117 reads encrypted data based on data indicating presence of encryption contained in TS packets included in a transport stream, and checks whether or not decryption has been normally performed. Decoder 117 has a function of outputting (specifically, sending to display device 210) a signal (such as a video signal, an audio signal) related to broadcast contents as a result of the decoding to the outside of broadcast receiving device 100 when a result of a decryption by CAM 190 is normal. That is, decoder 117 can send a signal related to broadcast contents to display device 210, and can send the signal to recording device 220. Under the control of controller 113, an image signal generated by decoder 117 is sent to display device 210 via a transmission path not according to USB (in other words, without affecting data transfer through the USB hub). Also, controller 113 can send a signal for displaying graphics indicating a notification message for a user, and thus a message or the like can be displayed on display device 210. It is to be noted that when the housing of broadcast receiving device 100 is provided with a display, controller 113 may display a notification message for a user on the display.

In addition to the inside of system LSI 110, controller 113 can control each unit in broadcast receiving device 100 by transmitting a control signal from system LSI 110. Controller 113 has functions of controlling FE 121a to 121c according to, for instance, a user operation received by operation reception 130 and of causing these FEs to receive a broadcast signal according to a tuning operation of a user and of outputting a transport stream. Also, controller 113 can set a priority of each FE according to each transport stream outputted by each FE based on a predetermined algorithm. It is to be noted that a user is allowed to set a priority of each FE. As an example of the setting, a highest priority is placed on an FE which receives a transport stream related to broadcast contents for which a programmed viewing or recording operation has been performed by a user. Out of respective transport streams outputted by FE 121a to 121c, controller113 selects one or more transport streams to be data-transferred to CAM 190. The selection is made based on a priority which is set so that data transfer related to a local TS is performed within a range of a maximum bit rate (for instance, 96 Mbps) specified by the DVB-CI standard.

Specifically, controller 113 has identifier 1131 as a functional unit for identifying, for each of FE 121a to 121c, a bit rate necessary for data transfer of a transport stream outputted by the FE. For each of FE 121a to 121c, based on detection of a predetermined packet in a transport stream outputted by the FE, identifier 1131 identifies a bit rate necessary for data transfer of the transport stream by calculation. For instance, for a transport stream outputted by FE 121a, identifier 1131 specifies PID of a predetermined packet (for instance, a TS packet related to an image of a specific service) to PID selector 114a, a TS packet of PID is successively detected by PID selector 114a, a detection time interval is measured, and a bit rate necessary for data transfer of a transport stream outputted by FE 121a is calculated from the data size and the detection time interval. When the total of bit rates (specifically, the bit rates calculated for FE 121a to 121c) identified by identifier 1131 is smaller than a predetermined value (for instance, 96 Mbps), identifier 1131 selects all of respective transport streams outputted by FE 121a to 121c as the data transfer target. Also, when the total of the bit rates identified by identifier 1131 is larger than the predetermined value, controller 113 selects a data transfer target based on a predetermined criterion related to priority order between FE 121a to 121c so that a transport stream outputted by at least one FE is excluded from the data transfer target. The predetermined criterion is, for instance, that FE is excluded in an ascending order of priority.

Controller 113 authenticates CAM 190 by predetermined authentication steps. Also, controller 113 performs data transfer to and from Mux115 and Demux116, and CAM 190 through USB hub 140 for transmitting transport streams to CAM 190 which has succeeded in authentication and receiving a decryption result, the transport streams being one or more transport streams selected as the data transfer target out of the transport streams outputted by FE 121a to 121c of receiver 120. When one transport stream is selected as a data transfer target out of the transport streams outputted from FEs, controller 113 can perform data transfer for the transport stream to and from CAM 190 without using Mux115 and Demux116. Also, for a transport stream which needs no decryption by CAM out of the transport streams outputted from FEs, controller 113 performs control so that the transport stream is inputted to decoder 117 not through CAM, for instance. Also, controller 113 can perform data transfer to and from device 290.

Measurer 111 performs data transfer to and from CAM 190 connected to USB port 141 for CAM according to predetermined steps, and transfer mode, thereby measuring communication performance of data transfer according to USB. Measurer 111 measures a maximum data transfer rate as the communication performance by transferring a certain volume of data to CAM 190 and receiving the same volume of data as return. When high speed transfer, for instance, a maximum of 480 Mbps in USB 2.0 standard is performed between system LSI 110 and CAM 190, the actual data transfer rate can be lower than 480 Mbps. Thus, measurer 111 measures actual communication performance by actually transferring data to and from CAM 190.

When operation reception 130 receives a user operation for data transfer to and from device 290 connected to USB port 142, determining unit 112 determines whether or not a predetermined condition is satisfied in data transfer according to USB, based on the communication performance measured by measurer 111, the predetermined condition being that transfer with a first bit rate necessary for data transfer to and from CAM 190 by controller 113 is achieved and transfer with a second bit rate necessary for data transfer with device 290 is achieved.

Determining unit 112 identifies a predetermined bit rate, for instance, a maximum bit rate (for instance, 96 Mbps) specified by the DVB-CI standard as first bit rate. It is to be noted that determining unit 112 may refer to information that associates each of a plurality of modulation methods with a bit rate, and may identify the first bit rate based on a modulation method of the broadcast signal which forms a basis of the transport stream transmitted to CAM 190 selected as a data transfer target by controller 113 and is received by FE. Also, determining unit 112 may refer to information that associates each of a plurality of service types with a bit rate, and may identify the first bit rate based on a service type indicated by the broadcast signal which forms a basis of the transport stream transmitted to CAM 190 selected as a data transfer target by controller 113 and is received by FE.

Determining unit 112 receives a descriptor from device 290 connected to USB port 142, refers to information that associates each of a plurality of device classes with a bit rate, and identifies the second bit rate based on a device class identified by the received descriptor.

According to a determination result of determining unit 112, control of data transfer to and from a device is performed by controller 113. That is, when the above-mentioned predetermined condition is determined to be satisfied by controller 113, controller 113 performs data transfer to and from device 290 which is a target of the user operation. When the above-mentioned predetermined condition is determined to be not satisfied by controller 113, controller 113 deters data transfer to and from device 290, and sends to display device 210 a signal for displaying a predetermined message indicating that data transfer to and from device 290 is not performed. When broadcast receiving device 100 is provided with a display, controller 113 may display the predetermined message on the display.

### [1-2. Operation]

Hereinafter, the operation of broadcast receiving device 100 having the above-mentioned configuration will be described.

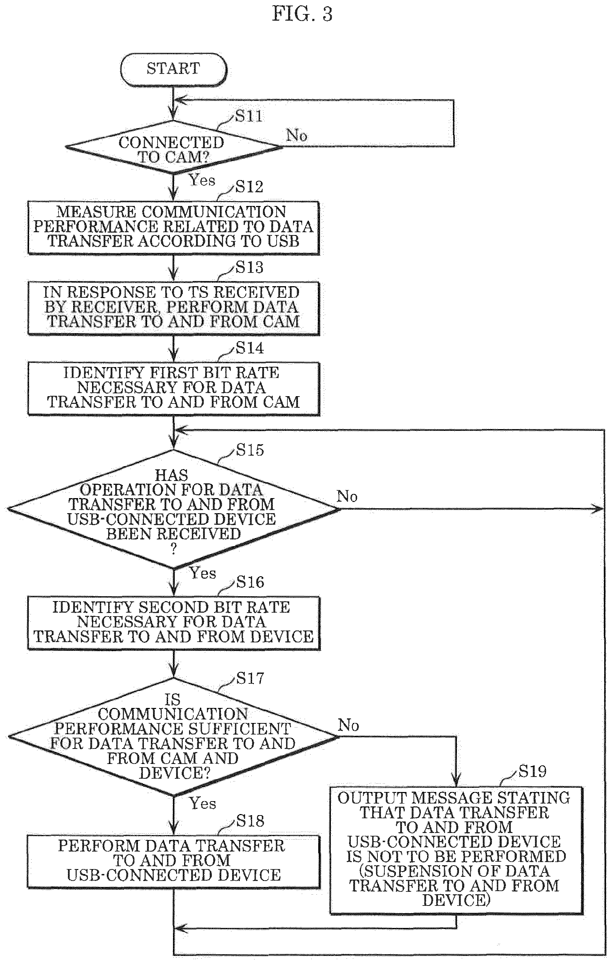

FIG. 3 is a flowchart illustrating an operation example of broadcast receiving device 100.

First, in broadcast receiving device 100, controller 113 verifies that CAM 190 is connected to USB port 141 for CAM (step S11). Controller 113 authenticates CAM 190 based on the DVB-CI Plus standard, for instance. When CAM 190 is already connected to USB port 141 for CAM, authentication of CAM 190 is performed at the time of start-up (when the power supply is turned on) of broadcast receiving device 100. In addition, authentication of CAM 190 may be performed when CAM 190 is connected to USB port 141 for CAM.

Broadcast receiving device 100, measures the communication performance related to data transfer according to USB using measurer 111 by performing data transfer according to predetermined steps between system LSI 110 and CAM 190 via USB hub 140 and USB port 141 for CAM (step S12).

Subsequently, broadcast reception device 100 receives a an operation of a user by operation reception 130, and operation reception 130 transmits the information related to the operation to controller 113. When a user performs a tuning operation to select a broadcasting station (such as a channel) which provides the broadcast contents which the user wants to view, controller 113 controls receiver 120, that is, FE 121a to 121c according to the tuning, and causes receiver 120 to receive broadcast signals. A user can tune different broadcasting station from one FE to another. Here, broadcast signals received according to tuning of a user are the broadcast signals of a pay broadcast, and description is given under the assumption that the signals are encrypted. It is to be noted that for instance, when the power supply of broadcast receiving device 100 is turned off, controller 113 stores the broadcasting stations (such as channels) of the broadcast received by each FE, and when the power supply is turned on, the stored broadcasting stations are restored as if a user tunes those broadcasting stations. When performing a tuning operation, a user may designate an output destination (either the broadcast contents are displayed on display device 210 or the broadcast contents are recorded in recording device 220) of the broadcast contents. Broadcast receiving device 100 performs CAM transfer processing under the control of controller 113. Specifically, controller 113 performs data transfer to and from CAM 190 as CAM transfer processing for one or more transport streams selected as a data transfer target among the transport streams related to the broadcast contents received by FE 121a to 121c (step S13). Thus, for instance, selected multiple transport streams are multiplexed by Mux115, and generated local TS is transmitted to CAM 190 through USB hub 140 and USB port 141 for CAM, and a decryption result replied by CAM 190 is separated by Demux116, and is decoded by decoder 117. The decode result is sent to display device 210, and broadcast contents are displayed on display device 210.

Also, determining unit 112 of broadcast receiving device 100 identifies the first bit rate necessary for data transfer to and from CAM 190 (step S14).

When device 290 is connected to USB port 142, and an operation for data transfer to and from the connected device 290 is received by broadcast receiving device 100 (step S15), determining unit 112 identifies the second bit rate necessary for the data transfer based on the device class of device 290 (step S16).

Determining unit 112 determines whether or not the communication performance related to data transfer according to USB measured by measurer 111 is sufficient to perform both data transfer to and from CAM 190, and data transfer to and from device 290 (step S17). Specifically, determining unit 112 compares the total bit rate of the first bit rate and the second bit rate with a maximum data transfer rate which is a measured communication performance, and when the communication performance is higher, determines that the communication performance is sufficient, and when the communication performance is lower, determines that the communication performance is insufficient. When determination unit 112 determines with communication performance being sufficient, control unit 113 executes data transfer with device 290 (step S18). When determining unit 112 determines that the communication performance is insufficient, controller 113 suspends execution of data transfer to and from device 290, and sends to display device 210 a signal for displaying a predetermined message indicating that data transfer to and from device 290 is not performed (step S19). In step S19, controller 113 may display the predetermined message on a display included in broadcast receiving device 100.

As described above, broadcast reception device 100 performs data transfer to and from device 290 connected to USB port 142 only in the case where data transfer of a transport stream to and from CAM 190 is not effected by the data transfer to and from device 290.

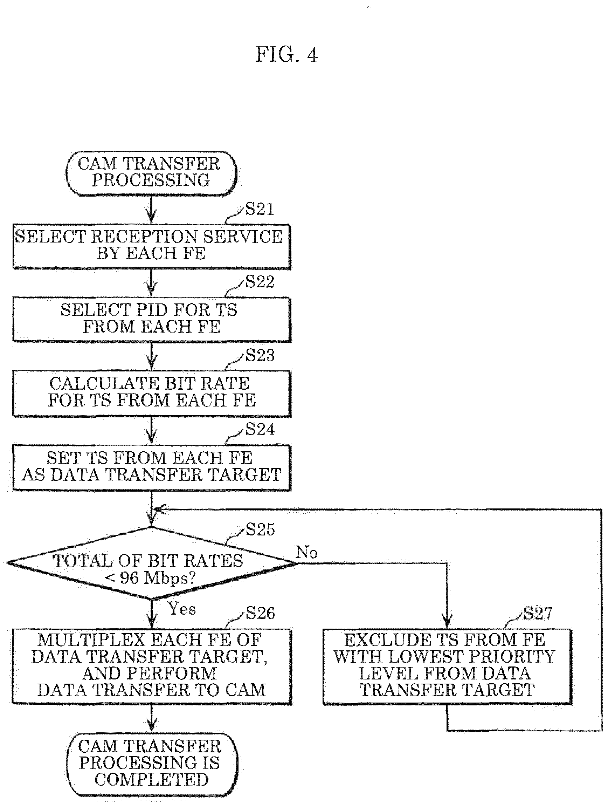

FIG. 4 is a flowchart illustrating an example of CAM transfer processing by broadcast receiving device 100. Hereinafter, an example of the CAM transfer processing performed by controller 113 in step S13 will be described with reference to FIG. 4.

Controller 113 selects respective services to be received by FE 121a to 121c according to a user operation received by operation reception 130 (step S21). For transport streams obtained from broadcast signals received by FE 121a to 121c, controller 113 selects PID to be extracted by PID selectors 114a to 114c (step S22), and calculates a bit rate necessary for data transfer of the transport streams by identifier 1131 (step S23).

Next, controller 113 once sets the transport streams from FE 121a to 121c as a data transfer target (step S24), and determines whether or not the total of the bit rates necessary for transfer of the transport streams as a data transfer target is smaller than a predetermined value (for instance, 96 Mbps) (step S25). When the total of the bit rates necessary for transfer of the transport streams as a data transfer target is smaller than a predetermined value, controller 113 performs control so that the transport streams are multiplexed by Mux115, and are transmitted to CAM 190 via USB hub 140 and USB port 141 for CAM, thereby performing data transfer to and from CAM 190 (step S26).

Also, in step S25, when the total of the bit rates necessary for transfer of the transport streams as a data transfer target is determined to be larger than a predetermined value, controller 113 excludes the transport stream outputted by an FE having a lowest priority order from the data transfer target, based on a predetermined criterion related to priority order between FE 121a to 121c (step S27), and the flow returns to the determination in step S25.

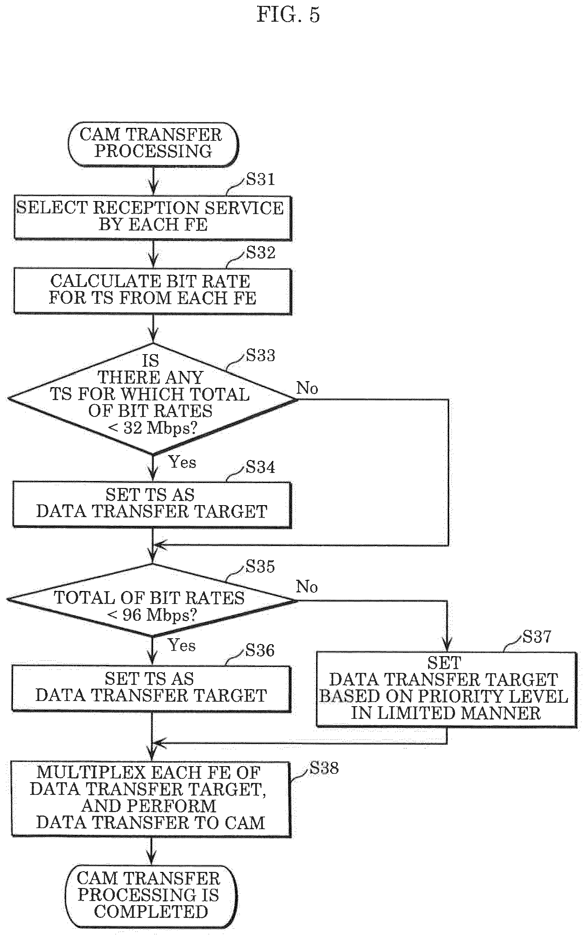

The CAM transfer processing described above is only an example, and may be modified as illustrated in FIG. 5, for instance. Hereinafter, a modification of the CAM transfer processing performed by controller 113 in step S13 will be described with reference to FIG. 5.

Controller 113 selects respective services to be received by FE 121a to 121c according to a user operation received by operation reception 130 (step S31). Controller 113 refers to information which associates each of a plurality of modulation methods with a bit rate, thereby calculating a bit rate according to the modulation method of the broadcast signal received by each of FE 121a to 121c (step S32).

Subsequently, controller 113 determines whether or not a bit rate necessary for data transfer of either one of the respective transport streams from FE 121a to 121c is smaller than a specific value (for instance, 32 Mbps) obtained by dividing the maximum bit rate (for instance, 96 Mbps) specified by the DVB-CI standard by the number of FEs, which is 3 (step S33). When a transport stream having a bit rate smaller than the specific value, controller 113 sets the transport stream as a data transfer target (step S34), and when no transport stream has a bit rate smaller than the specific value, controller 113 sets no data transfer target.

Subsequently, controller 113 determines whether or not the total of the bit rate of either one of the transport streams which are not set as a data transfer target, and the bit rate of the transport stream which is set as a data transfer target is smaller than a predetermined value (for instance, 96 Mbps) (step S35). When the total is smaller than a predetermined value for one of the transport streams, controller 113 adds the one of the transport streams to the data transfer target (step S36). Otherwise, controller 113 selects a transport stream in the descending order of priority based on a predetermined criterion related to priority order between FE 121a to 121c so that total bit rate is smaller than a predetermined value, and sets the transport stream as a data transfer target (step S37).

Controller 113 then performs control so that the transport streams set as the data transfer target are multiplexed by Mux115, and are transmitted to CAM 190 via USB hub 140 and USB port 141 for CAM, thereby performing data transfer to and from CAM 190 (step S38).

### [1-3. Effect]

Broadcast receiving device 100 allows data transfer to and from a USB device which has no effect on ensuring of data transfer between system LSI 110 and USB CAM 190. However, due to a relationship with a limitation of communication performance of USB, broadcast receiving device 100 may suspend data transfer to and from a USB device which effects on data transfer to and from CAM 190. Consequently, reduction in a bandwidth usable by the CA, and occurrence of a situation such as disturbance of display of pay broadcast contents due to an effect of a device connected according to USB is prevented, and a user can view the pay broadcast appropriately.

In broadcast receiving device 100, a CAM capable of performing decryption of a single transport stream only may be allowed utilized. However, as described above, when CAM 190 having a function of decrypting a plurality of transport streams is utilized, control is performed in consideration of a relationship with the maximum bit rate specified by the DVB-CI standard. For instance, when a maximum bit rate is defined as 96 Mbps in the standard of the interface with the CAM, in broadcast receiving device 100, one or more transport streams are selected as the target of data transfer to the CAM in a range of the maximum bit rate. Broadcast receiving device 100 may determine whether or not the CAM can decrypt a plurality of transport streams through authentication of the CAM. Although an example has been illustrated, in which broadcast receiving device 100 has three FEs, the number of FEs is not limited to three, and may be two, for instance. A threshold is set to a specific value obtained by dividing the maximum bit rate by the number of FEs, in other words, the number of transport streams related to input broadcast, and a transport stream as a target of data transfer to and from the CAM is selected based on the bit rate and priority corresponding to each FE. Consequently, occurrence of a situation such as disturbance of display of pay broadcast contents is prevented, and a user can view a pay broadcast appropriately.

### (Embodiment 2)

In this embodiment, broadcast receiving device 100a, which is a partially modified version of broadcast receiving device 100 illustrated in Embodiment 1, will be described.

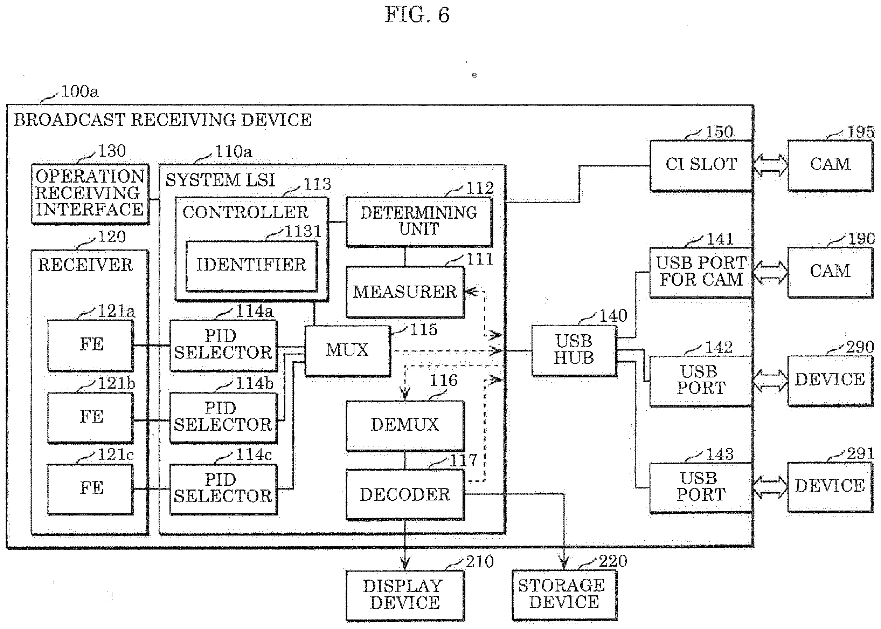

FIG. 6 illustrates the configuration of broadcast receiving device 100a. It is to be noted that FIG. 6 additionally illustrates CAM 195 inserted and connected to CI slot 150 of broadcast receiving device 100a, CAM 190 connected to the USB port for CAM of broadcast receiving device 100a, device 290 and device 291 connected to the USB port of broadcast receiving device 100a, and display device 210 and recording device 220 connected to broadcast receiving device 100s via a cable or the like.

As illustrated in FIG. 6, broadcast receiving device 100a includes system LSI 110a, receiving unit 120, operation reception 130, USB hub 140, USB port 141 for CAM, USB port 142, USB port 143, and CI slot 150. The components of broadcast receiving device 100a, which are the same as the components of broadcast receiving device 100 (see FIG. 2) illustrated in Embodiment 1, are labeled with the same symbol in FIG. 6 as in FIG. 2, and description is omitted here. Broadcast receiving device 100a is the same as broadcast receiving device 100 unless otherwise particularly described. In broadcast receiving device 100a, a user can selectively utilize either one of CAM 195 corresponding to version 1.4 of the DVB-CI Plus standard, and CAM 190 connectable by USB in version 2.0 or later.

CI slot 150 is an interface which supports version 1.4 of DVB-CI Plus standard, and in which a card CAM 195 can be inserted. CAM 195 is capable of decrypting a plurality of transport streams.

System LSI 110a is a system such that system LSI 110 is modified so that data can be sent and received to and from CAM 195 connected to CI slot 150. The transport stream, which is outputted from each FE and selected as a data transfer target by controller 113, is multiplexed by Mux115 and transmitted to CAM 195. In contrast, CAM 195 replies with a decryption result, the decryption result is separated by Demux116, and is decoded by decoder 117 then outputted. Controller 113 can implement selection of a transport stream to be transmitted to CAM 195 by the method illustrated in Embodiment 1 (for instance, the steps illustrated in FIGs. 4 and 5).

When CAM 190 is connected to USB port 141 for CAM, controller 113 makes determination as to propriety of execution of data transfer to and from various devices connected to the USB port by the steps illustrated in FIG. 3. In step S17, when it is determined that the communication performance is sufficient for each data transfer based on the first bit rate necessary for data transfer of CAM190, the second bit rate necessary for data transfer to and from device 290 or device 291 connected to each USB port, and the measured communication performance, each data transfer is performed. When the communication performance is insufficient, data transfer of at least one device, which is selected from device 290 and device 291 based on a predetermined criterion, is not performed.

### (Other Embodiments)

As described above, Embodiments 1, 2 have been described as examples of the technique disclosed in the present application. However, the technique in the present disclosure is not limited to this, and is applicable to an embodiment in which modification, substitution, addition, or omission is made.

It has been assumed that broadcast receiving devices 100, 100a illustrated in the embodiments are STB. However, without being limited to STB having an independent housing, broadcast receiving devices 100, 100a may form part of a television receiver having a display screen, or part of a recording device (such as a recording reproduction device). Alternatively, for instance, broadcast receiving devices 100, 100a may include display device 210 or recording device 220. It is to be noted that the components of broadcast receiving devices 100, 100a may not be provided in a single housing, and may be, for instance, separated to different housings as long as mutually coordinated operation is possible.

Also, in the embodiment, broadcast receiving devices 100, 100a are configured to receive broadcast signals related to broadcast contents including video and audio. However, for instance, broadcast receiving devices 100, 100a may receive a transport stream not including audio but including video.

Although in the embodiments, an example has been illustrated, in which system LSIs 110, 110a are connected to a USB port via USB hub 140, system LSIs 110, 110a may be directly connected to a plurality of USB ports including a USB port for CAM not necessarily via USB hub 140. The version of the standard related to the USB used in broadcast receiving devices 100, 100a is not limited to USB 2.0 and may be any version.

Although CAM 190 is connected to USB port 141 for CAM in the embodiments, another USB port (for instance, USB port 142) and USB port 141 for CAM do not need to be distinguished from each other. Even when a USB port for CAM is not particularly provided, when a CAM is identifiable by the descriptor of the USB device, the USB port to which the CAM is connected can be handled in the same manner as for the above-mentioned USB port 141 for CAM.

The number of USB ports illustrated in the embodiments is merely an example, and broadcast receiving devices 100, 100a may include more USB ports. Although in the embodiments, an example has been illustrated, in which device 290 is connected to USB port 142, device 290 may be connected to USB port 142 via a USB hub.

The functional assignment between the functional components of broadcast receiving devices 100, 100a illustrated in the embodiments is merely an example, and the assignment may be changed in any manner.

Also, system LSI in broadcast receiving devices 100, 100a is merely an example, and the functional components of broadcast receiving devices 100, 100a, may be individually implemented as a single chip by a semiconductor device such as an integrated circuit (IC), a large scale integration (LSI), or may be implemented as a single chip to include part or all of the functional components. Also, the technique for circuit integration is not limited to LSI, and the circuit integration may be implemented with a dedicated circuit or a general-purpose processor. FPGA (Field Programmable Gate Array) which can be programmed after an LSI is manufactured, or a reconfigurable processor for which connection and setup of the circuit cells inside an LSI can be reconfigured may be utilized. Furthermore, in the case where new technology of circuit integration which replaces the LSI is invented due to the progress of semiconductor technology or other emerging technology, naturally, a functional block may be integrated using the technology. Application of biotechnology may have such potential.

The data transfer method in one aspect of the present disclosure may include all or part of the processing steps illustrated in FIGs. 3 to 5, for instance. For instance, the data transfer method is used by broadcast receiving devices 100, 100a including USB port 141 for CAM to be connected to a CAM that decrypts an inputted transport stream and outputs a decryption result, USB port 141 to be connected to a device, and receiver 120 that receives a broadcast signal and outputs a transport stream based on the broadcast signal, and the method includes: measuring communication performance (for instance, step S12) for data transfer according to USB by performing data transfer to and from the CAM; performing first data transfer (step S13) to and from the CAM for transmitting the transport stream outputted by receiver 120 to the CAM and receiving a decryption result; when an operation for data transfer to and from the device connected to USB port 142 is received, determining whether or not a predetermined condition is satisfied in data transfer according to USB (for instance, step S17), based on the communication performance measured in the measuring, the predetermined condition being that transfer with a first bit rate necessary for data transfer to and from the CAM in the performing of first data transfer is achieved and transfer with a second bit rate necessary for data transfer with the device is achieved; and when the predetermined condition is determined to be satisfied by the determining unit, performing second data transfer (for instance, step S18) to and from the device specified by the operation. Also, a control program recorded on a recording medium in one aspect of the present disclosure may be a control program for implementing predetermined data transfer processing according to the data transfer method by broadcast receiving devices 100, 100a.

The execution order of the steps (for instance, the steps illustrated in FIGs. 3 to 5) of various types of processing illustrated in the embodiments is not necessarily limited to the order described above, and the execution order may be changed as needed, and a plurality of steps may be performed in parallel, or part of the steps may be omitted.

Also, all or part of the above-described various types of processing (for instance, the steps illustrated in FIGs. 3 to 5) may be implemented by hardware such as an electronic circuit or may implemented using software. The processing of software is implemented by executing a control program stored in a memory by the processor included in the broadcast receiving device. Alternatively, the control program may be recorded on a recording medium and distributed or circulated. For instance, a distributed control program is installed in a broadcast receiving device, and is executed by the processor of the broadcast receiving device, thereby making it possible to cause the broadcast receiving device to perform various types of processing (the processing illustrated in FIGs. 3 to 5).

Also, an embodiment implemented by combining the components and functions illustrated in the embodiments described above in any manner is also included in the range of the present disclosure.

Although the present invention has been described and illustrated in detail, it is clearly understood that the same is by way of example only and is not to be taken by way of limitation, the scope of the present invention being limited only by the terms of the appended claims.

### INDUSTRIAL APPLICABILITY

The present disclosure is applicable to a broadcast receiving device.

### REFERENCE SIGNS LIST

- 100, 100a: broadcast receiving device
- 110, 110a: system LSI
- 111: measurer
- 112: determining unit
- 113: controller
- 1131: identifier
- 114a to 114c: PID selectors
- 115: multiplexer (Mux)
- 116: demultiplexer (Demux)
- 117: decoder
- 120: rceiver
- 121a to 121c: front ends (FE)
- 130: operation reception
- 140: USB hub
- 141: USB port 141 for CAM (first USB port)
- 142: USB port (second USB port)
- 143: USB port 143
- 150: CI slot
- 190, 195: CAM
- 210: display device
- 220: recording device
- 290, 291: device

## Claims

1. A broadcast receiving device comprising:
a first USB port (141) to be connected to a conditional access module (CAM) (190) that decrypts an inputted transport stream and outputs a decryption result;
a second USB port (142) to be connected to a device (290);
a receiver (120) that receives a broadcast signal and outputs a transport stream based on the broadcast signal;
a controller (113) that has a USB host controller that performs data transfer to and from the CAM (190) connected to the first USB port (141) and the device (290) connected to the second USB port (142) through a common transmission path, data transfer to and from the CAM (190) being performed for transmitting the transport stream outputted by the receiver (120) to the CAM (190) and receiving a decryption result;
a measurer (111) that measures a maximum data transfer rate as a communication performance for data transfer according to USB by performing data transfer to and from the CAM; and
a determining unit (112) that, when an operation for data transfer to and from the device (290) connected to the second USB port (142) is received, performs determination as to whether or not a predetermined condition is satisfied in data transfer according to USB, the predetermined condition being that transfer with a first bit rate necessary for data transfer to and from the CAM (190), by the controller (113) is achieved and transfer with a second bit rate necessary for data transfer with the device (290) is achieved, by comparing the total bit rate of the first bit rate and the second bit rate with the measured maximum data transfer rate as the communication performance;
wherein the determining unit (112) identifies the first bit rate according to any of the following identifying methods :
∘ the determining unit (112) identifies a predetermined bit rate, that is a maximum bit rate specified by DVB-CI standard, as first bit rate,
∘ the determining unit (112) refers to information that associates each of a plurality of modulation methods with a bit rate, and identifies the first bit rate based on a modulation method of the broadcast signal which is base of the transport stream provided to the CAM (190) by the controller (113) and is received by the receiver (120), and
∘ the determining unit (112) refers to information that associates each of a plurality of service types with a bit rate, and identifies the first bit rate based on a service type indicated by the broadcast signal which is base of the transport stream provided to the CAM (190) by the controller (113) and is received by the receiver (120),
wherein the determining unit (112) refers to information that associates each of a plurality of device classes with a bit rate, and identifies the second bit rate based on a device class identified based on a descriptor received from the device (290) connected to the second USB port (142);
wherein when the predetermined condition is determined to be satisfied by the determining unit (112), the controller (113) further performs data transfer to and from the device (290) specified by the operation.

2. The broadcast receiving device according to claim 1,
wherein the controller (113) sends an image signal to a display device (210) via a transmission path not according to the USB, and when the predetermined condition is determined not to be satisfied by the determining unit, suspends data transfer to and from the device (290) specified by the operation, the image signal being generated by decoding a decryption result received from the CAM (190).

3. The broadcast receiving device according to claim 2,
wherein when suspending data transfer to and from the device (290) specified by the operation, the controller (113) sends to the display device (210) a signal for displaying a predetermined message indicating that data transfer to and from the device (290) is not performed.

4. The broadcast receiving device according to any one of claims 1 to 3,
wherein the receiver (120) has a plurality of receiving circuits, each of the receiving circuits being configured to receive a broadcast signal and output a transport stream based on the broadcast signal, and
the controller (113) performs data transfer to and from the CAM (190) for transmitting to the CAM (190) one or more transport streams selected among respective transport streams outputted by the plurality of receiving circuits and for receiving a decryption result.

5. The broadcast receiving device according to claim 4,
wherein the controller (113) has an identifier that, for the plurality of receiving circuits, makes identification of respective bit rates necessary for data transfer of the transport stream outputted by the receiving circuit, and
when a total of the bit rates identified by the identifier is smaller than a predetermined value, the controller (113) selects all the transport stream outputted by each of the plurality of receiving circuits and performs data transfer to and from the CAM (190) for transmitting the transport stream to the CAM (190) and receiving a decryption result, and, a priority order being defined between the receiving circuits, when the total is larger than the predetermined value, the controller (113) does not select a transport stream outputted by at least one of the plurality of receiving circuits according to the priority of the receiving circuit outputting said transport stream.

6. The broadcast receiving device according to claim 5,
wherein for each of the plurality of receiving circuits, the identifier makes the identification of the bit rate by calculating the bit rate necessary for data transfer of the transport stream based on detection of a predetermined packet in the transport stream outputted by the receiving circuit.

7. A data transfer method used by a broadcast receiving device including a first USB port (141) to be connected to a conditional access module (CAM) (190) that decrypts an inputted transport stream and outputs a decryption result, a second USB port (142) to be connected to a device (290), a receiver (120) that receives a broadcast signal and outputs a transport stream based on the broadcast signal, and a USB host controller that performs data transfer to and from the CAM (190) connected to the first USB port (141) and the device (290) connected to the second USB port (142) through a common transmission path, the method comprising:
measuring a maximum data transfer rate as a communication performance for data transfer according to USB by performing data transfer to and from the CAM;
performing first data transfer to and from the CAM (190) for transmitting the transport stream outputted by the receiver to the CAM (190) and receiving a decryption result;
when an operation for data transfer to and from the device (290) connected to the second USB port (142) is received, determining whether or not a predetermined condition is satisfied in data transfer according to USB, the predetermined condition being that transfer with a first bit rate necessary for data transfer to and from the CAM (190) in the performing of first data transfer is achieved and transfer with a second bit rate necessary for data transfer with the device (290) is achieved, by comparing the total bit rate of the first bit rate and the second bit rate with the measured maximum data transfer rate as the communication performance;
wherein the first bit rate is identified according to any of the following identifying methods :
∘ identifying a predetermined bit rate, that is a maximum bit rate specified by DVB-CI standard, as first bit rate ;
∘ referring to information that associates each of a plurality of modulation methods with a bit rate, and identifying the first bit rate based on a modulation method of the broadcast signal which is base of the transport stream provided to the CAM (190) and is received by the receiver (120), and
∘ referring to information that associates each of a plurality of service types with a bit rate, and identifying the first bit rate based on a service type indicated by the broadcast signal which is base of the transport stream provided to the CAM (190) and is received by the receiver (120),
wherein the second bit rate is identified by referring to information that associates each of a plurality of device classes with a bit rate, and identifying the second bit rate based on a device class identified based on a descriptor received from the device (290) connected to the second USB port (142),
and
when the predetermined condition is determined to be satisfied in the determining, performing second data transfer to and from the device (290) specified by the operation.

8. A non-transitory computer-readable recording medium for use in a broadcast receiving device including a microprocessor, a first USB port (141) to be connected to a conditional access module (CAM) that decrypts an inputted transport stream and outputs a decryption result, a second USB port (142) to be connected to a device, a receiver (120) that receives a broadcast signal and outputs a transport stream based on the broadcast signal, and a USB host controller that performs data transfer to and from the CAM (190) connected to the first USB port (141) and the device (290) connected to the second USB port (142) through a common transmission path, the recording medium having a control program recorded thereon for causing the broadcast receiving device to execute predetermined data transfer processing including:
measuring a maximum data transfer rate as a communication performance for data transfer according to USB by performing data transfer to and from the CAM;
performing first data transfer to and from the CAM (190) for transmitting the transport stream outputted by the receiver (120) to the CAM (190) and receiving a decryption result;
when an operation for data transfer to and from the device (290) connected to the second USB port (142) is received, determining whether or not a predetermined condition is satisfied in data transfer according to USB, the predetermined condition being that transfer with a first bit rate necessary for data transfer to and from the CAM (190) in the performing of first data transfer is achieved and transfer with a second bit rate necessary for data transfer with the device (290) is achieved, by comparing the total bit rate of the first bit rate and the second bit rate with the measured maximum data transfer rate as the communication performance;
wherein the first bit rate is identified according to any of the following identifying methods :
∘ identifying a predetermined bit rate, that is a maximum bit rate specified by DVB-CI standard, as first bit rate;
∘ referring to information that associates each of a plurality of modulation methods with a bit rate, and identifying the first bit rate based on a modulation method of the broadcast signal which is base of the transport stream provided to the CAM (190) and is received by the receiver (120), and
∘ referring to information that associates each of a plurality of service types with a bit rate, and identifying the first bit rate based on a service type indicated by the broadcast signal which is base of the transport stream provided to the CAM (190) and is received by the receiver (120),
wherein the second bit rate is identified by referring to information that associates each of a plurality of device classes with a bit rate, and identifying the second bit rate based on a device class identified based on a descriptor received from the device (290) connected to the second USB port (142),
and
when the predetermined condition is determined to be satisfied in the determining, performing second data transfer to and from the device specified by the operation.

## Patentansprüche

1. Broadcastempfangsvorrichtung, die Folgendes umfasst:
einen ersten USB-Anschluss (141), der mit einem Modul für bedingten Zugriff (CAM) (190) zu verbinden ist, das einen eingegebenen Transportstrom entschlüsselt und ein Entschlüsselungsergebnis ausgibt;
einen zweiten USB-Anschluss (142), der mit einer Vorrichtung (290) zu verbinden ist;
einen Empfänger (120), der ein Broadcastsignal empfängt und auf Basis des Broadcastsignals einen Transportstrom ausgibt;
eine Steuerung (113), die eine USB-Hoststeuerung aufweist, die eine Datenübermittlung zum und vom CAM (190), das mit dem ersten USB-Anschluss (141) verbunden ist, und zur und von der Vorrichtung (290), die mit dem zweiten USB-Anschluss (142) verbunden ist, über einen gemeinsamen Übertragungspfad durchführt, wobei die Datenübermittlung zum und vom CAM (190) zum Übertragen des vom Empfänger (120) ausgegebenen Transportstroms zum CAM (190) und zum Empfangen eines Entschlüsselungsergebnisses durchgeführt wird;
einen Messer (111), der durch Durchführen einer Datenübermittlung zum und vom CAM eine maximale Datenübermittlungsrate als eine Kommunikationsleistung für eine Datenübermittlung gemäß USB misst; und
eine Bestimmungseinheit (112), die, wenn eine Operation zur Datenübermittlung zur und von der Vorrichtung (290), die mit dem zweiten USB-Anschluss (142) verbunden ist, empfangen wird, eine Bestimmung, ob eine vorbestimmte Bedingung bei der Datenübermittlung gemäß USB erfüllt ist oder nicht, wobei die vorbestimmte Bedingung darin besteht, dass eine Übermittlung mit einer ersten Bitrate, die für eine Datenübermittlung zum und vom CAM (190) erforderlich ist, durch die Steuerung (113) erreicht wird und eine Übermittlung mit einer zweiten Bitrate, die für eine Datenübermittlung mit der Vorrichtung (290) erforderlich ist, erreicht wird, durch Vergleichen der Gesamtbitrate der ersten Bitrate und der zweiten Bitrate mit der gemessenen maximalen Datenübermittlungsrate als die Kommunikationsleistung durchführt;
wobei die Bestimmungseinheit (112) die erste Bitrate gemäß einem der folgenden Identifizierungsverfahren identifiziert:
∘ die Bestimmungseinheit (112) identifiziert eine vorbestimmte Bitrate, die eine vom Standard DVB-CI spezifizierte maximale Bitrate ist, als erste Bitrate,
∘ die Bestimmungseinheit (112) referenziert Informationen, die jedes einer Vielzahl von Modulationsverfahren mit einer Bitrate verknüpfen, und identifiziert die erste Bitrate auf Basis eines Modulationsverfahrens des Broadcastsignals, das die Basis des Transportstroms ist, der dem CAM (190) durch die Steuerung (113) bereitgestellt und vom Empfänger (120) empfangen wird, und
∘ die Bestimmungseinheit (112) referenziert Informationen, die jeden einer Vielzahl von Diensttypen mit einer Bitrate verknüpfen, und identifiziert die erste Bitrate auf Basis eines Diensttyps, der vom Broadcastsignal angezeigt wird, das die Basis des Transportstroms ist, der dem CAM (190) durch die Steuerung (113) bereitgestellt und vom Empfänger (120) empfangen wird,
wobei die Bestimmungseinheit (112) Informationen referenziert, die jede einer Vielzahl von Vorrichtungsklassen mit einer Bitrate verknüpfen, und die zweite Bitrate auf Basis einer Vorrichtungsklasse identifiziert, die auf Basis eines Deskriptors identifiziert wird, der von der Vorrichtung (290) empfangen wird, die mit dem zweiten USB-Anschluss (142) verbunden ist;
wobei, wenn von der Bestimmungseinheit (112) bestimmt wird, dass die vorbestimmte Bedingung erfüllt ist, die Steuerung (113) ferner eine Datenübermittlung zur und von der Vorrichtung (290), die durch die Operation spezifiziert ist, durchführt.

2. Broadcastempfangsvorrichtung nach Anspruch 1,
wobei die Steuerung (113) via einen Übertragungspfad ein Bildsignal nicht gemäß dem USB an eine Anzeigevorrichtung (210) sendet und, wenn von der Bestimmungseinheit bestimmt wird, dass die vorbestimmte Bedingung nicht erfüllt ist, die Datenübermittlung zur und von der Vorrichtung (290), die durch die Operation spezifiziert ist, aussetzt, wobei das Bildsignal durch Decodieren eines vom CAM (190) empfangenen Entschlüsselungsergebnisses erzeugt wird.

3. Broadcastempfangsvorrichtung nach Anspruch 2,
wobei die Steuerung (113), wenn sie die Datenübermittlung zur und von der Vorrichtung (290), die durch die Operation spezifiziert ist, aussetzt, ein Signal zum Anzeigen einer vorbestimmten Nachricht, die anzeigt, dass die Datenübermittlung zur und von der Vorrichtung (290) nicht durchgeführt wird, an die Anzeigevorrichtung (210) sendet.

4. Broadcastempfangsvorrichtung nach einem der Ansprüche 1 bis 3,
wobei der Empfänger (120) eine Vielzahl von Empfangsschaltungen aufweist, wobei jede der Empfangsschaltungen dazu ausgelegt ist, ein Broadcastsignal zu empfangen und auf Basis des Broadcastsignals einen Transportstrom auszugeben, und
die Steuerung (113) führt zum Übertragen von einem oder mehreren Transportströmen, die aus jeweiligen Transportströmen ausgewählt sind, die von der Vielzahl von Empfangsschaltungen ausgegeben werden, zum CAM (190) und zum Empfangen eines Entschlüsselungsergebnisses eine Datenübermittlung zum und vom CAM (190) durch.

5. Broadcastempfangsvorrichtung nach Anspruch 4,
wobei die Steuerung (113) eine Kennung aufweist, die für die Vielzahl von Empfangsschaltungen eine Identifikation von jeweiligen Bitraten, die für die Datenübermittlung des von der Empfangsschaltung ausgegebenen Transportstroms erforderlich ist, vornimmt, und
wenn ein Gesamtwert der Bitraten, die durch die Kennung identifiziert sind, kleiner als ein vorbestimmter Wert ist, wählt die Steuerung (113) den gesamten Transportstrom aus, der von jeder der Vielzahl von Empfangsschaltungen ausgegeben wird, und führt zum Übertragen des Transportstroms zum CAM (190) und Empfangen eines Entschlüsselungsergebnisses eine Datenübermittlung zum und vom CAM (190) durch und, wobei eine Prioritätsreihenfolge zwischen den Empfangsschaltungen definiert ist, wenn der Gesamtwert größer ist als der vorbestimmte Wert, wählt die Steuerung (113) gemäß der Priorität der Empfangsschaltung, die den Transportstrom ausgibt, keinen Transportstrom aus, der von mindestens einer der Vielzahl von Empfangsschaltungen ausgegeben wird.

6. Broadcastempfangsvorrichtung nach Anspruch 5,
wobei die Kennung für jede der Vielzahl von Empfangsschaltungen die Identifikation der Bitrate durch Berechnen der Bitrate, die für die Datenübermittlung des Transportstroms erforderlich ist, auf Basis der Detektion eines vorbestimmten Pakets im Transportstrom, der von der Empfangsschaltung ausgegeben wird, vornimmt.

7. Datenübermittlungsverfahren, das von einer Broadcastempfangsvorrichtung verwendet wird, die einen ersten USB-Anschluss (141), der mit einem Modul für bedingten Zugriff (CAM) (190) zu verbinden ist, das einen eingegebenen Transportstrom entschlüsselt und ein Entschlüsselungsergebnis ausgibt, einen zweiten USB-Anschluss (142), der mit einer Vorrichtung (290) zu verbinden ist, einen Empfänger (120), der ein Broadcastsignal empfängt und auf Basis des Broadcastsignals einen Transportstrom ausgibt, und eine USB-Hoststeuerung, die eine Datenübermittlung zum und vom CAM (190), das mit dem ersten USB-Anschluss (141) verbunden ist, und zur und von der Vorrichtung (290), die mit dem zweiten USB-Anschluss (142) verbunden ist, über einen gemeinsamen Übertragungspfad durchführt, beinhaltet, wobei das Verfahren Folgendes umfasst:
Messen einer maximalen Datenübermittlungsrate als eine Kommunikationsleistung für eine Datenübermittlung gemäß USB durch Durchführen einer Datenübermittlung zum und vom CAM;
Durchführen einer ersten Datenübermittlung zum und vom CAM (190) zum Übertragen des Transportstroms, der vom Empfänger ausgegeben wird, zum CAM (190) und Empfangen eines Entschlüsselungsergebnisses;
wenn eine Operation zur Datenübermittlung zur und von der Vorrichtung (290), die mit dem zweiten USB-Anschluss (142) verbunden ist, empfangen wird, Bestimmen, ob eine vorbestimmte Bedingung bei der Datenübermittlung gemäß USB erfüllt ist oder nicht, wobei die vorbestimmte Bedingung darin besteht, dass eine Übermittlung mit einer ersten Bitrate, die für eine Datenübermittlung zum und vom CAM (190) erforderlich ist, bei der Durchführung der ersten Datenübermittlung erreicht wird und eine Übermittlung mit einer zweiten Bitrate, die für eine Datenübermittlung mit der Vorrichtung (290) erforderlich ist, erreicht wird, durch Vergleichen der Gesamtbitrate der ersten Bitrate und der zweiten Bitrate mit der gemessenen maximalen Datenübermittlungsrate als die Kommunikationsleistung;
wobei die erste Bitrate gemäß einem der folgenden Identifizierungsverfahren identifiziert wird:
∘ Identifizieren einer vorbestimmten Bitrate, die eine vom Standard DVB-CI spezifizierte maximale Bitrate ist, als erste Bitrate;
∘ Referenzieren von Informationen, die jedes einer Vielzahl von Modulationsverfahren mit einer Bitrate verknüpfen, und Identifizieren der erste Bitrate auf Basis eines Modulationsverfahrens des Broadcastsignals, das die Basis des Transportstroms ist, der dem CAM (190) bereitgestellt und vom Empfänger (120) empfangen wird, und
∘ Referenzieren von Informationen, die jeden einer Vielzahl von Diensttypen mit einer Bitrate verknüpfen, und Identifizieren der ersten Bitrate auf Basis eines Diensttyps, der vom Broadcastsignal angezeigt wird, das die Basis des Transportstroms ist, der dem CAM (190) bereitgestellt und vom Empfänger (120) empfangen wird,
wobei die zweite Bitrate durch Referenzieren von Informationen, die jede einer Vielzahl von Vorrichtungsklassen mit einer Bitrate verknüpfen, und Identifizieren der zweiten Bitrate auf Basis einer Vorrichtungsklasse, die auf Basis eines Deskriptors identifiziert wird, der von der Vorrichtung (290) empfangen wird, die mit dem zweiten USB-Anschluss (142) verbunden ist, identifiziert wird,
und
wenn beim Bestimmen bestimmt wird, dass die vorbestimmte Bedingung erfüllt ist, Durchführen einer zweiten Datenübermittlung zur und von der Vorrichtung (290), die durch die Operation spezifiziert ist.

8. Nichttransitorisches computerlesbares Aufzeichnungsmedium zur Verwendung in einer Broadcastempfangsvorrichtung, die einen Mikroprozessor, einen ersten USB-Anschluss (141), der mit einem Modul für bedingten Zugriff (CAM) zu verbinden ist, das einen eingegebenen Transportstrom entschlüsselt und ein Entschlüsselungsergebnis ausgibt, einen zweiten USB-Anschluss (142), der mit einer Vorrichtung zu verbinden ist, einen Empfänger (120), der ein Broadcastsignal empfängt und auf Basis des Broadcastsignals einen Transportstrom ausgibt, und eine USB-Hoststeuerung, die eine Datenübermittlung zum und vom CAM (190), das mit dem ersten USB-Anschluss (141) verbunden ist, und zur und von der Vorrichtung (290), die mit dem zweiten USB-Anschluss (142) verbunden ist, über einen gemeinsamen Übertragungspfad durchführt, beinhaltet, wobei auf dem Aufzeichnungsmedium ein Steuerprogramm aufgezeichnet ist, das bewirkt, dass die Broadcastempfangsvorrichtung eine vorbestimmte Datenübermittlungsverarbeitung ausführt, die Folgendes beinhaltet:
Messen einer maximalen Datenübermittlungsrate als eine Kommunikationsleistung für eine Datenübermittlung gemäß USB durch Durchführen einer Datenübermittlung zum und vom CAM;
Durchführen einer ersten Datenübermittlung zum und vom CAM (190) zum Übertragen des Transportstroms, der vom Empfänger (120) ausgegeben wird, zum CAM (190) und Empfangen eines Entschlüsselungsergebnisses;
wenn eine Operation zur Datenübermittlung zur und von der Vorrichtung (290), die mit dem zweiten USB-Anschluss (142) verbunden ist, empfangen wird, Bestimmen, ob eine vorbestimmte Bedingung bei der Datenübermittlung gemäß USB erfüllt ist oder nicht, wobei die vorbestimmte Bedingung darin besteht, dass eine Übermittlung mit einer ersten Bitrate, die für eine Datenübermittlung zum und vom CAM (190) erforderlich ist, bei der Durchführung der ersten Datenübermittlung erreicht wird und eine Übermittlung mit einer zweiten Bitrate, die für eine Datenübermittlung mit der Vorrichtung (290) erforderlich ist, erreicht wird, durch Vergleichen der Gesamtbitrate der ersten Bitrate und der zweiten Bitrate mit der gemessenen maximalen Datenübermittlungsrate als die Kommunikationsleistung;
wobei die erste Bitrate gemäß einem der folgenden Identifizierungsverfahren identifiziert wird:
∘ Identifizieren einer vorbestimmten Bitrate, die eine vom Standard DVB-CI spezifizierte maximale Bitrate ist, als erste Bitrate;
∘ Referenzieren von Informationen, die jedes einer Vielzahl von Modulationsverfahren mit einer Bitrate verknüpfen, und Identifizieren der erste Bitrate auf Basis eines Modulationsverfahrens des Broadcastsignals, das die Basis des Transportstroms ist, der dem CAM (190) bereitgestellt und vom Empfänger (120) empfangen wird, und
∘ Referenzieren von Informationen, die jeden einer Vielzahl von Diensttypen mit einer Bitrate verknüpfen, und Identifizieren der ersten Bitrate auf Basis eines Diensttyps, der vom Broadcastsignal angezeigt wird, das die Basis des Transportstroms ist, der dem CAM (190) bereitgestellt und vom Empfänger (120) empfangen wird,
wobei die zweite Bitrate durch Referenzieren von Informationen, die jede einer Vielzahl von Vorrichtungsklassen mit einer Bitrate verknüpfen, und Identifizieren der zweiten Bitrate auf Basis einer Vorrichtungsklasse, die auf Basis eines Deskriptors identifiziert wird, der von der Vorrichtung (290) empfangen wird, die mit dem zweiten USB-Anschluss (142) verbunden ist, identifiziert wird,
und
wenn beim Bestimmen bestimmt wird, dass die vorbestimmte Bedingung erfüllt ist, Durchführen einer zweiten Datenübermittlung zur und von der Vorrichtung, die durch die Operation spezifiziert ist.

## Revendications

1. Dispositif de réception de diffusion comprenant :
un premier port USB (141) à connecter à un module d'accès conditionnel (CAM) (190) qui déchiffre un flux de transport entré et sort un résultat de déchiffrement ;
un second port USB (142) à connecter à un dispositif (290) ;
un récepteur (120) qui reçoit un signal de diffusion et sort un flux de transport sur la base du signal de diffusion ;
un contrôleur (113) qui a un contrôleur hôte USB qui effectue un transfert de données vers et depuis le CAM (190) connecté au premier port USB (141) et le dispositif (290) connecté au second port USB (142) par l'intermédiaire d'un trajet de transmission commun, un transfert de données vers depuis le CAM (190) étant effectué pour transmettre le flux de transport sorti par le récepteur (120) au CAM (190) et recevoir un résultat de déchiffrement ;
un mesureur (111) qui mesure un taux de transfert de données maximum comme une performance de communication pour un transfert de données conforme à USB en effectuant un transfert de données vers et depuis le CAM ; et
une unité de détermination (112) qui, lorsqu'une opération pour un transfert de données vers et depuis le dispositif (290) connecté au second port USB (142) est reçue, effectue une détermination quant à si oui ou non une condition prédéterminée est satisfaite dans un transfert de données conforme à USB, la condition prédéterminée étant qu'un transfert avec un premier débit binaire nécessaire pour un transfert de données vers et depuis le CAM (190), par le contrôleur (113) soit réalisé et qu'un transfert avec un second débit binaire nécessaire pour un transfert de données avec le dispositif (290) soit réalisé, en comparant le débit binaire total du premier débit binaire et du second débit binaire avec le taux de transfert de données maximum mesuré comme la performance de communication ;
dans lequel l'unité de détermination (112) identifie le premier débit binaire selon l'une quelconque des méthodes d'identification suivantes :
∘ l'unité de détermination (112) identifie un débit binaire prédéterminé, qui est un débit binaire maximum spécifié par la norme DVB-CI, comme premier débit binaire,
∘ l'unité de détermination (112) se réfère à des informations qui associent chacune d'une pluralité de méthodes de modulation à un débit binaire, et identifie le premier débit binaire sur la base d'une méthode de modulation du signal de diffusion qui est une base du flux de transport fourni au CAM (190) par le contrôleur (113) et est reçu par le récepteur (120), et
∘ l'unité de détermination (112) se réfère à des informations qui associent chacun d'une pluralité de types de service à un débit binaire, et identifie le premier débit binaire sur la base d'un type de service indiqué par le signal de diffusion qui est une base du flux de transport fourni au CAM (190) par le contrôleur (113) et est reçu par le récepteur (120),
dans lequel l'unité de détermination (112) se réfère à des informations qui associent chacune d'une pluralité de classes de dispositif à un débit binaire, et identifie le second débit binaire sur la base d'une classe de dispositif identifiée sur la base d'un descripteur reçu en provenance du dispositif (290) connecté au second port USB (142) ;
dans lequel lorsque la condition prédéterminée est déterminée comme étant satisfaite par l'unité de détermination (112), le contrôleur (113) effectue en outre un transfert de données vers et depuis le dispositif (290) spécifié par l'opération.

2. Dispositif de réception de diffusion selon la revendication 1,
dans lequel le contrôleur (113) envoie un signal d'image à un dispositif d'affichage (210) via un trajet de transmission non conforme à l'USB, et lorsque la condition prédéterminée est déterminée comme n'étant pas satisfaite par l'unité de détermination, suspend un transfert de données vers et depuis le dispositif (290) spécifié par l'opération, le signal d'image étant généré en décodant un résultat de déchiffrement reçu en provenance du CAM (190).

3. Dispositif de réception de diffusion selon la revendication 2,
dans lequel lors de la suspension d'un transfert de données vers et depuis le dispositif (290) spécifié par l'opération, le contrôleur (113) envoie au dispositif d'affichage (210) un signal pour afficher un message prédéterminé indiquant qu'un transfert de données vers et depuis le dispositif (290) n'est pas effectué.

4. Dispositif de réception de diffusion selon l'une quelconque des revendications 1 à 3,
dans lequel le récepteur (120) a une pluralité de circuits de réception, chacun des circuits de réception étant configuré pour recevoir un signal de diffusion et sortir un flux de transport sur la base du signal de diffusion, et
le contrôleur (113) effectue un transfert de données vers et depuis le CAM (190) pour transmettre au CAM (190) un ou plusieurs flux de transport sélectionnés parmi des flux de transport respectifs sortis par la pluralité de circuits de réception et pour recevoir un résultat de déchiffrement.

5. Dispositif de réception de diffusion selon la revendication 4,
dans lequel le contrôleur (113) a un identifiant qui, pour la pluralité de circuits de réception, rend l'identification de débits binaires respectifs nécessaire pour un transfert de données du flux de transport sorti par le circuit de réception, et
lorsqu'un total des débits binaires identifiés par l'identifiant est plus petit qu'une valeur prédéterminée, le contrôleur (113) sélectionne tout le flux de transport sorti par chacun de la pluralité de circuits de réception et effectue un transfert de données vers et depuis le CAM (190) pour transmettre le flux de transport au CAM (190) et recevoir un résultat de déchiffrement, et, un ordre de priorité étant défini entre les circuits de réception, lorsque le total est plus grand que la valeur prédéterminée, le contrôleur (113) ne sélectionne pas un flux de transport sorti par au moins l'un de la pluralité de circuits de réception selon la priorité du circuit de réception sortant ledit flux de transport.

6. Dispositif de réception de diffusion selon la revendication 5,
dans lequel pour chacun de la pluralité de circuits de réception, l'identifiant effectue l'identification du débit binaire en calculant le débit binaire nécessaire pour un transfert de données du flux de transport sur la base de la détection d'un paquet prédéterminé dans le flux de transport sorti par le circuit de réception.

7. Procédé de transfert de données utilisé par un dispositif de réception de diffusion incluant un premier port USB (141) à connecter à un module d'accès conditionnel (CAM) (190) qui déchiffre un flux de transport entré et sort un résultat de déchiffrement, un second port USB (142) à connecter à un dispositif (290), un récepteur (120) qui reçoit un signal de diffusion et sort un flux de transport sur la base du signal de diffusion, et un contrôleur hôte USB qui effectue un transfert de données vers et depuis le CAM (190) connecté au premier port USB (141) et le dispositif (290) connecté au second port USB (142) par l'intermédiaire d'un trajet de transmission commun, le procédé comprenant :
la mesure d'un taux de transfert de données maximum comme une performance de communication pour un transfert de données conforme à USB en effectuant un transfert de données vers et depuis le CAM ;
l'exécution d'un premier transfert de données vers et depuis le CAM (190) pour transmettre le flux de transport sorti par le récepteur au CAM (190) et recevoir un résultat de déchiffrement ;
lorsqu'une opération pour un transfert de données vers et depuis le dispositif (290) connecté au second port USB (142) est reçue, la détermination de si oui ou non une condition prédéterminée est satisfaite dans un transfert de données conforme à USB, la condition prédéterminée étant qu'un transfert avec un premier débit binaire nécessaire pour un transfert de données vers et depuis le CAM (190) dans l'exécution d'un premier transfert de données soit réalisé et qu'un transfert avec un second débit binaire nécessaire pour un transfert de données avec le dispositif (290) soit réalisé, en comparant le débit binaire total du premier débit binaire et du second débit binaire avec le taux de transfert de données maximum mesuré comme la performance de communication ;
dans lequel le premier débit binaire est identifié selon l'une quelconque des méthodes d'identification suivantes :
∘ l'identification d'un débit binaire prédéterminé, qui est un débit binaire maximum spécifié par la norme DVB-CI, comme premier débit binaire,
∘ la référence à des informations qui associent chacune d'une pluralité de méthodes de modulation à un débit binaire, et l'identification du premier débit binaire sur la base d'une méthode de modulation du signal de diffusion qui est une base du flux de transport fourni au CAM (190) et est reçu par le récepteur (120), et
∘ la référence à des informations qui associent chacun d'une pluralité de types de service à un débit binaire, et l'identification du premier débit binaire sur la base d'un type de service indiqué par le signal de diffusion qui est une base du flux de transport fourni au CAM (190) et est reçu par le récepteur (120),
dans lequel le second débit binaire est identifié en se référant à des informations qui associent chacune d'une pluralité de classes de dispositif à un débit binaire, et en identifiant le second débit binaire sur la base d'une classe de dispositif identifiée sur la base d'un descripteur reçu en provenance du dispositif (290) connecté au second port USB (142),
et
lorsque la condition prédéterminée est déterminée comme étant satisfaite lors de la détermination, l'exécution d'un second transfert de données vers et depuis le dispositif (290) spécifié par l'opération.

8. Support d'enregistrement lisible par ordinateur non transitoire destiné à être utilisé dans un dispositif de réception de diffusion incluant un microprocesseur, un premier port USB (141) à connecter à un module d'accès conditionnel (CAM) qui déchiffre un flux de transport entré et sort un résultat de déchiffrement, un second USB port (142) à connecter à un dispositif, un récepteur (120) qui reçoit un signal de diffusion et sort un flux de transport sur la base du signal de diffusion, et un contrôleur hôte USB qui effectue un transfert de données vers et depuis le CAM (190) connecté au premier port USB (141) et le dispositif (290) connecté au second port USB (142) par l'intermédiaire d'un trajet de transmission commun, le support d'enregistrement ayant un programme de contrôle enregistré dessus pour amener le dispositif de réception de diffusion à exécuter un traitement de transfert de données prédéterminé incluant :
la mesure d'un taux de transfert de données maximum comme une performance de communication pour un transfert de données conforme à USB en effectuant un transfert de données vers et depuis le CAM ;
l'exécution d'un premier transfert de données vers et depuis le CAM (190) pour transmettre le flux de transport sorti par le récepteur (120) au CAM (190) et recevoir un résultat de déchiffrement ;
lorsqu'une opération pour un transfert de données vers et depuis le dispositif (290) connecté au second port USB (142) est reçue, la détermination de si oui ou non une condition prédéterminée est satisfaite dans un transfert de données conforme à USB, la condition prédéterminée étant qu'un transfert avec un premier débit binaire nécessaire pour un transfert de données vers et depuis le CAM (190) dans l'exécution d'un premier transfert de données soit réalisé et qu'un transfert avec un second débit binaire nécessaire pour un transfert de données avec le dispositif (290) soit réalisé, en comparant le débit binaire total du premier débit binaire et du second débit binaire avec le taux de transfert de données maximum mesuré comme la performance de communication ;
dans lequel le premier débit binaire est identifié selon l'une quelconque des méthodes d'identification suivantes :
∘ l'identification d'un débit binaire prédéterminé, qui est un débit binaire maximum spécifié par la norme DVB-CI, comme premier débit binaire,
∘ la référence à des informations qui associent chacune d'une pluralité de méthodes de modulation à un débit binaire, et l'identification du premier débit binaire sur la base d'une méthode de modulation du signal de diffusion qui est une base du flux de transport fourni au CAM (190) et est reçu par le récepteur (120), et
∘ la référence à des informations qui associent chacun d'une pluralité de types de service à un débit binaire, et l'identification du premier débit binaire sur la base d'un type de service indiqué par le signal de diffusion qui est une base du flux de transport fourni au CAM (190) et est reçu par le récepteur (120),
dans lequel le second débit binaire est identifié en se référant à des informations qui associent chacune d'une pluralité de classes de dispositif à un débit binaire, et en identifiant le second débit binaire sur la base d'une classe de dispositif identifiée sur la base d'un descripteur reçu en provenance du dispositif (290) connecté au second port USB (142),
et
lorsque la condition prédéterminée est déterminée comme étant satisfaite lors de la détermination, l'exécution d'un second transfert de données vers et depuis le dispositif spécifié par l'opération.
